# EUROPÄISCHE PATENTANMELDUNG

(11) **EP 2 113 554 A1**
(43) Veröffentlichungstag der Anmeldung: **04.11.2009**
(21) Anmeldenummer: 08103757.4
(22) Anmeldetag: 29.04.2008
(51) Int. Cl.: C10L 5/40, C10L 5/44, B30B 11/20

(54) **Verfahren zur Herstellung von gepressten Produkten aus faserhaltigen Rohstoffen**

(71) Anmelder: Bühler AG, 9240 Uzwil (CH)
(72) Erfinder: Kratzer, Markus, 8280, Kreuzlingen (CH); Franke, Matthias, 78479 Reichenau (DE)

(57) **Zusammenfassung**

Die Erfindung betrifft ein Verfahren zur Herstellung von gepressten Produkten zur Energiegewinnung aus faserhaltigen Rohstoffen wie Holz, Stroh, Torf oder dergleichen, die auch als nachwachsende Rohstoffe bezeichnet werden.
Um gut verpresste Produkte herzustellen, werden faserhaltiger Rohstoffe mit Wasser, Dampf und ggf. weiteren Zusätzen unter Erwärmung der Roh- und Zusatzstoffe gemischt, wobei das Gemisch vor einem Verpressen über längere Zeit auf hoher Temperatur gehalten wird.

## Beschreibung

Die Erfindung betrifft ein Verfahren zur Herstellung von gepressten Produkten aus faserhaltigen Rohstoffen wie Holz, Stroh, Torf oder dergleichen, die auch als nachwachsende Rohstoffe bezeichnet werden.

Die Erfindung betrifft weiterhin eine Einrichtung zur Ausführung eines solchen Verfahrens.

Würfelpressen oder Futterwürfelpressen bzw. Pelletpressen sind seit vielen Jahren in der praktischen Anwendung in der Futter- und Lebensmittelindustrie oder auch im Nonfoodbereich. Verpresst werden körnige, pulverförmige und/oder pastöse Materialien mit unterschiedlichsten Feuchtegehalten und Zusammensetzungen.

Sie weisen Pressformen und Abstreifer auf, um Würfel bzw. Pellets in gewünschter Grösse herzustellen. Eine solche Würfelpresse ist z.B. in der EP-A-371519 offenbart. Das zu verpressende Material gelangt aus einem Einfülltrichter in einen Förder- und Dosierapparat und von dort in einen Mischer. Beide Apparate sind an der Oberseite des Gehäuses der eigentlichen Presse angeordnet, wobei der Ausgang des Mischers in einen abgeknickten Einfüllkasten (und in einen Formdeckel) fördert, der darunter angeordnet aber nicht starr mit dem Mischer verbunden ist. Vom Formdeckel aus gelangt das Material in die Pressform.

Eine Pressform ist mit einem rotierenden Pressformhalter fest verbunden. Fest angeordnet ist ebenfalls ein Rollenträger mit einem daran befestigten Rollensteg. Zwei Rollen sind mittels einer Kolben-Zylinder-Einheit verstellbar angeordnet, so dass verschiedene Spalte und Pressdrücke an der Formmatrize einstellbar sind.

Eine weitere Pelletisierpresse zeigt die EP-B-489046, bei der die Form und mindestens eine Pressrolle mit veränderlicher Geschwindigkeit und in Abhängigkeit von der Spalthöhe antreibbar sind.

Bekannt sind verschiedene Lösungen um die Formen in einer Würfelpresse zu befestigen. Die eingangs genannte feste Anordnung, die eine einfache Verschraubung der Form beinhaltet, ist zwar kostengünstig bedingt aber einen zeitaufwendigen Formwechsel. Bekannt sind aber auch Lösungen für einen schnellen Wechsel z.B. nach USP 4979887, bei denen z.B. die einzelnen Klemmsegmente durch Kurzhub-Hydraulikzylinder am Umfang eines Schleissringes betätigt werden. Zum Formwechsel werden die Hydraulikzylinder an eine externe Hydraulikpumpe angeschlossen.

Nach der DE-OS 2108326 ist es auch bekannt, zwecks besserer Montage die Klemmsegmente mittels Federelementen in der die Matrize klemmenden Stellung zu halten, wobei Stellmittel vorgesehen sind, die Klemmsegmente entgegen der Federwirkung zu lösen. Durch Überwindung der Federspannkräfte soll die Matrize einfach von der Säule belöst oder wieder befestigt werden können. Als Stellmittel werden hydraulische Winden verwendet. Eine ähnliche Lösung zeigt die DE-OS 2756647, bei der zur Befestigung der Matrize ein konischer Ring zur Anwendung kommt.

Mischaggregate sind zum Beispiel aus den EP-B-231764 und EP-B-610789 bekannt. Hierbei ist einem solchen Mischer eine Dosiereinrichtung vorgeschaltet und aus dem Mischer wiederum wird eine Pressform oder ein Expander gespeist. Das Mischaggregat ist mit einem Heizmantel versehen und enthält eine rotierende Welle, die mit Misch- und Förderelementen bestückt ist.

Derartige Aggregate sind dabei entweder auf den Einsatz in Press- oder Expanderanlagen zugeschnitten oder nur solitär verwendbar, da der Anpassungsaufwand hoch ist.

Press- oder Expanderanlagen werden vorrangig zur Herstellung von Lebens- oder Futtermitteln eingesetzt, bekannt ist aber auch die Herstellung von Pellets aus Holz oder Abfällen der Getreidevermahlung, zum Beispiel aus Weizenkleie. In der DE-A-10205105 ist ein Verfahren zur Herstellung von Pellets aus Holz offenbart, bei dem Holzgut mit einer voreingestellten Feuchte in einer Pelletierpresse verpresst wird, wobei das Gut mit höherer Feuchte unter Wärmeentwicklung vorpelletiert wird und anschliessend Feuchte abgeführt wird. Aus der DE-A-10010414 ist es bekannt, Holzfasern o. dgl. mit bis zu 50 Gew.-% eines wärmehärtbaren Harzes zu mischen und die Mischung zu extrudieren.

Der Erfindung liegt die Aufgabe zugrunde, ein Verfahren zur Herstellung von gepressten Produkten aus faserhaltigen Rohstoffen zu entwickeln, welches zum Beispiel die Herstellung von Pellets aus Holz, Stroh, Torf oder Papier, Kunststoffgemische, oder jegliche Art von nachwachsenden Rohstoffen die zur Energiegewinnung pelletiert werden können) ermöglicht. Diese Aufgabe ist mit den Merkmalen des Anspruchs 1 gelöst.

Das Verfahren ist gekennzeichnet durch eine längere Verweilzeit (Langzeitkonditionierung) bei hoher Temperatur nach dem einmischen von Wasser, Dampf und ggf. weiteren Zusätzen. Das Verweilen ist dem Verpressen vorgelagert.

Unter Langzeitkonditionierung ist als die oberhalb der normalen Mischzeit, bei ggf. zwei nacheinander geschalteten Mischern, je Mischer ca. 15-20 Sekunden, liegende Prozess-, bzw. Verweilzeit zu verstehen. Hinzu kommt eine zusätzliche Verweilzeit in einem Pufferdepot.

Die Konditionierungstemperatur kann bis zu 200°C betragen, bevorzugt ist ein Bereich bis zu 150°C.

Die Konditionierung kann auch unter Überdruck erfolgen (Hochdruckkonditionierung). Um Verweilzeiten bis zu einigen Stunden erreichen zu können, sind die Verweilbehälter/Reifebehälter bevorzugt isoliert.

Weitere Zusätze sind zum Beispiel Fett oder Lignin.

Der Erfindung liegt als weitere Aufgabe die Schaffung einer Einrichtung zur Ausführung eines Verfahrens nach den Ansprüchen 1 bis zugrunde. Diese Aufgabe ist mit den Merkmalen des Anspruchs gelöst.

Die Einrichtung weist einen, einem Mischer nachgeordneten Zwischenbehälter auf, in dem das gemischte Vorprodukt längere Zeit bei hoher Temperatur verweilt, so dass eingemischte Zusätze in ausreichender Weise in den Rohstoff eindringen können um ein gutes Verpressen zu gewährleisten.

Zudem kann durch den Zwischenbehälter ein pulsierender Produkteintrag in eine Presse oder einen Expander vermieden werden.

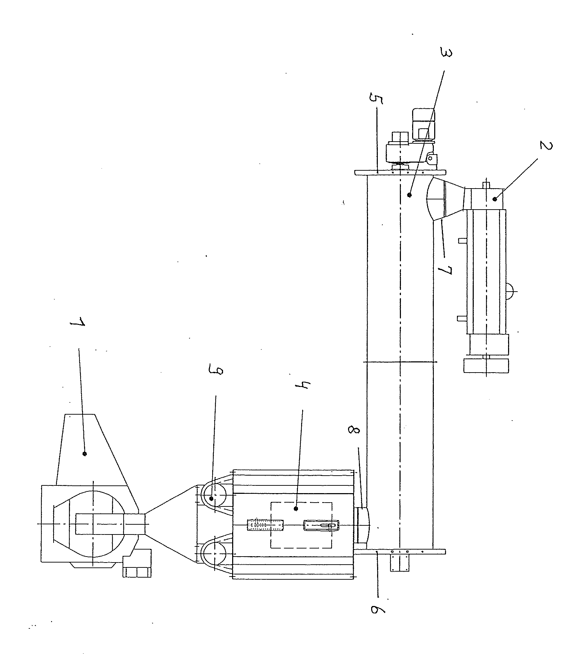

Die Erfindung wird nachfolgend in einem Ausführungsbeispiel an Hand einer Zeichnung näher beschrieben. Die Zeichnung zeigt eine Pelletieranlage in einer Prinzipdarstellung.

Ein Pressenanlage beinhaltet einen Mischer 2, einen Verweiler 3 (Langzeitkonditioneur), die übereinander angeordnet sind. Der Mischer 2 und die Verweiler 3 weisen jeweils gleichartige Stirnplatten 5 bzw. 6 auf.

Die Produktführung erfolgt über die entsprechenden Produktzuführöffnung 7 bzw. Produktabführöffnung 8. Über die Produktabführöffnung 8 des Verweilers 3 erfolgt die Übergabe des Produkts in den Zwischenbehälter 4 und von diesem über eine Doppelschnecke 9 in eine Würfelpresse 1.

Aus dem Zwischenbehälter 4 wird mittels der Doppelschnecke 9, deren Schneckengänge mechanisch um 180° zueinander versetzt gekoppelt sind, wird die Presse pulsationsminimiert mit dem zu verpressenden Produkt gespeist. Ein definierter Versatz ist wesentlich um das Pulsieren zu minimieren. Die Kopplung kann dabei über eine Kette, ein Getriebe, Riemen etc. erfolgen.

Der Mischer 2 weist einen schnelllaufenden Rotor zur intensiven Produktdurchmischung mit Dampf, Gasen und/oder Flüssigkeiten auf. Der Verweiler 3 ist hingegen mit einem langsam laufenden Rotor versehen. Im Verweiler 3 wird das erhitzte, gemischte Produkt bereits über eine vorbestimmte Zeit auf einer definierten Temperatur gehalten.

Im Mischer (2) wird das Gemisch mittels Dampf oder anderer Energieträger bis auf 125°C erhitzt. Ferner werden im Mischer 2 Wasser zum Erreichen des optimalen Pelletierwassergehaltes sowie andere Additive zur Pelletierprozessoptimierung beigegeben.

Dem Verweiler 3 ist ein Zwischenbehälter 4 (Pufferdepot) nachgeordnet. Nachdem das Produkt im Mischer 2 auf Temperatur und den optimalen Wassergehalt gebracht wurde verweilt das Produkt über eine definierte Verweilzeit im Verweiler 3, wobei die Konditioniertemperatur über die zuvor definierte Verweilzeit gehalten wird. Dies wird über eine Isolation bzw. externe Heizmatten am Verweiler 3 erzielt. Dabei gilt First In - First Out.

Der Zwischenbehälter 4 verlängert die Verweilzeit und wirkt einem pulsierenden Speisen der Presse entgegen bzw. kompensiert dieses.

Die Wandungen des Zwischenbehälters 4 und ggf. des Verweilers 3 sind isoliert bzw. mit externen Heizmatten bestückt.

Mischer 3 und Verweiler 4 weisen dicht verschliessbare Öffnungen im jeweiligen Mantel auf. Mäntel und Übergabeöffnungen sowie die Stirnplatten 5, 6 können bei Bedarf vollständig mit Heizmatten und Isolationsmitteln belegt werden. Bevorzugt sind die Innenflächen der Mäntel, einschliesslich der Produktübergabeöffnungen (7 und 8) vollkommen glatt.

Mischer 2 und Verweiler 3 enthalten Rotoren mit Arbeitselementen. Diese sind im Verweiler 3 schneckenförmig (Vollschnecke) und im Mischer 2 paddelförmig ausgebildet.

Sämtliche Bauteile sind bevorzugt kompatibel und kombinierbar.

Der Verweiler 3 weist gegenüber dem Mischer 2 geringere Drehzahlen des Rotors auf, so dass für einen kontinuierlichen Betrieb das Fassungsvermögen der Einzelaggregate abzustimmen ist.

Die Pellets werden nach verlassen der Würfelpresse 1 in einem Kühler gekühlt und anschliessend in üblicher Weise weiteren Stationen zugeführt.

Vorteile einer solchen Langzeitkonditionierung sind:
➢ ruhiger, optimierter Pelletierprozess
➢ höherer Durchsatz
➢ weniger Energieaufwand pro Tonne Pellets
➢ höhere Standzeiten der Maschinen-, und Schleissteile
➢ bessere Pelletierbarkeit, von schlecht pelletierbarem Produkten

### Bezugszeichen

1. Würfelpresse
2. Mischer
3. Verweiler
4. Zwischenbehälter
5. Stirnplatte
6. Stirnplatte
7. Produktzuführöffnung
8. Produktabführöffnung
9. Doppelschnecke

## Patentansprüche

1. Verfahren zur Herstellung von gepressten Produkten aus faserhaltigen Rohstoffen wie Holz, Stroh, Torf oder dergleichen in einer Press- oder Expanderanlage durch Mischen faserhaltiger Rohstoffe mit Wasser, Dampf und ggf. weiteren Zusätzen unter Erwärmung der Roh- und Zusatzstoffe, **dadurch gekennzeichnet, dass** das Gemisch vor einem Verpressen über längere Zeit auf hoher Temperatur gehalten wird.

2. Verfahren nach Anspruch 1, **dadurch gekennzeichnet, dass** das Gemisch in einem Zwischenbehälter (4) gehalten wird.

3. Verfahren nach Anspruch 1 oder 2, **dadurch gekennzeichnet, dass** die Konditionierungstemperatur bis zu 200°C beträgt.

4. Verfahren nach einem der Ansprüche 1 bis 3, **dadurch gekennzeichnet, dass** das Gemisch bevorzugt bei einer Temperatur bis zu 150°C gehalten wird.

5. Verfahren nach einem der Ansprüche 1 bis 4, **dadurch gekennzeichnet, dass** den Rohstoffen zusätzlich Fett und/oder Lignin beigemischt werden.

6. Verfahren nach einem der Ansprüche 1 bis 5, **dadurch gekennzeichnet, dass** die Konditionierung drucklos oder bei Überdruck erfolgt.

7. Einrichtung zur Herstellung von gepressten Produkten aus faserhaltigen Rohstoffen wie Holz, Stroh, Torf oder dergleichen in einer Press- oder Expanderanlage unter Ausführung eines Verfahrens nach mindestens einem der Ansprüche 1 bis 4, **dadurch gekennzeichnet, dass** einem, auf einen Mischer (2) folgenden Verweiler (2) ein Zwischenbehälter (4) nachgeordnet ist.

8. Einrichtung nach Anspruch 7, **dadurch gekennzeichnet, dass** der Zwischenbehälter (4) einer Würfelpresse (1) oder einem Expander vorgelagert ist.

9. Einrichtung nach Anspruch 7 oder 8, **dadurch gekennzeichnet, das** dem Zwischenbehälter (4) eine Doppelschnecke (9) nachgeordnet ist, deren Schneckengänge mechanisch um 180° zueinander versetzt gekoppelt sind.

10. Einrichtung nach einem der Ansprüche 7 bis 9, **dadurch gekennzeichnet, dass** zumindest der Zwischenbehälter (4) thermisch isoliert ausgeführt ist.
